# EUROPEAN PATENT APPLICATION

(11) **EP 4 753 037 A1**
(43) Date of publication of application: **03.06.2026**
(21) Application number: 25218583.0
(22) Date of filing: 26.11.2025
(51) Int. Cl.: H01M 50/195, H01M 4/13, H01M 10/052, H01M 50/186, H01M 50/198

(54) **INSULATING COMPOSITION FOR RECHARGEABLE LITHIUM BATTERY, ELECTRODE AND RECHARGEABLE LITHIUM BATTERY MANUFACTURED USING SAME**

(30) Priority: 28.11.2024 KR 20240174130
(71) Applicant: SAMSUNG SDI CO., LTD., Yongin-si, Gyeonggi-do 17084 (KR)
(72) Inventor: Hong, Minyoung, 17084 Yongin-si, Gyeonggi-do (KR); Han, Seung-Hun, 17084 Yongin-si, Gyeonggi-do (KR); Choi, Kyubuem, 17084 Yongin-si, Gyeonggi-do (KR); Jung, Jiyoon, 17084 Yongin-si, Gyeonggi-do (KR); Park, Minsu, 17084 Yongin-si, Gyeonggi-do (KR)
(74) Representative: Meissner Bolte Partnerschaft mbB

(57) **Abstract**

Provided are an insulating composition for a rechargeable lithium battery, an electrode manufactured using the insulating composition, and a rechargeable lithium battery. The insulating composition for the rechargeable lithium battery includes a binder including a non-aqueous binder and an aqueous binder, inorganic particles, and a solvent. The non-aqueous binder includes a first non-aqueous polyvinylidene fluoride-based binder and a second non-aqueous polyimide-based binder.

## Description

### BACKGROUND

### 1. Field

An insulating composition for a rechargeable lithium battery, an electrode manufactured based on the insulating composition, and a rechargeable lithium battery including the electrode are disclosed.

### 2. Description of the Related Art

A rechargeable lithium battery may be recharged and typically has three or more times the energy density per unit weight as a conventional lead storage battery, nickel-cadmium battery, nickel hydrogen battery, nickel zinc battery, or the like. The rechargeable lithium battery may be also charged at a high rate and thus, may be suitably commercially manufactured for a laptop, a cell phone, an electric tool, an electric bike, and the like. Improving the energy density may be advantageous.

A rechargeable lithium battery is typically manufactured by injecting an electrolyte solution into an electrode assembly, which includes a positive electrode with a positive electrode active material capable of intercalating/deintercalating lithium ions, and a negative electrode with a negative electrode active material capable of intercalating/deintercalating lithium ions.

In general, a width of the negative electrode is wider than the width of the positive electrode, and a separator is interposed between the positive electrode and the negative electrode. Herein, a burr formed at the edge of the positive electrode coated region may come into contact with the negative electrode, and a short may occur between the positive electrode and the negative electrode, or an OCV (open-circuit voltage) drop may occur.

In order to address the above issue, a method of coating the positive electrode uncoated region using an insulating composition including inorganic particles is typically known. Binders that adhere the above-mentioned inorganic particles to the positive electrode uncoated region while also adhering different inorganic particles include polyvinylidene fluoride (PVdF) as a non-aqueous binder and a styrene-butadiene rubber (SBR) as an aqueous binder are known.

However, the PVdF binder presents an issue in that the PVdF binder loses its adhesive strength as it absorbs the electrolyte solution inside the rechargeable lithium battery, and swells after being coated on the positive electrode uncoated region, and the SBR binder presents an issue in that its viscosity steeply drops during the coating process, although the SBR binder has good adhesive strength after coating.

### SUMMARY

The present invention is concerned with an insulating composition for a rechargeable lithium battery that further improves coating processability and insulating layer properties while complementing the shortcomings of a non-aqueous binder and an aqueous binder.

In one example embodiment, the present invention is directed to an insulating composition for a rechargeable lithium battery which includes a binder including a non-aqueous binder and an aqueous binder; inorganic particles; and a solvent, wherein the non-aqueous binder includes a first non-aqueous polyvinylidene fluoride-based binder and a second non-aqueous polyimide-based binder.

In another example embodiment, the present invention is directed to an electrode for a rechargeable lithium battery manufactured using an insulating composition according to the aforementioned embodiments.

In yet another example embodiment, the present invention is directed to a rechargeable lithium battery, wherein at least one of the positive electrode and the negative electrode is or includes an electrode according to the aforementioned embodiment.

The insulating composition for the rechargeable lithium battery according to the aforementioned example embodiments may further improve the coating processability and the insulating layer properties while compensating for the shortcomings of the non-aqueous binder and the aqueous binder.

Accordingly, an electrode and a rechargeable lithium battery manufactured using the insulating composition for the rechargeable lithium battery according to the aforementioned example embodiments may exhibit desired or improved cycle-life characteristics.

### BRIEF DESCRIPTION OF THE DRAWINGS

FIG. 1 is a schematic view illustrating an electrode for a rechargeable lithium battery according to some example embodiments.
FIGS. 2 to 5 are schematic views illustrating rechargeable lithium batteries according to some example embodiments.

### DETAILED DESCRIPTION

Hereinafter, example embodiments of the present disclosure are described in detail. However, these embodiments are examples, the present disclosure is not limited thereto and the present disclosure is defined by the scope of claims.

As used herein, when a specific definition is not otherwise provided, It is understood that when an element such as a layer, film, region, or substrate is referred to as being "on" another element, the element can be "directly on" the other element, or intervening elements may also be present therebetween.

As used herein, when a specific definition is not otherwise provided, the singular may also include the plural. In addition, unless otherwise specified, "A or B" may mean "including A, including B, or including A and B."

As used herein, "combination thereof" may mean a mixture, a stack, a composite, a copolymer, an alloy, a blend, or a reaction product of constituents.

As used herein, when a definition is not otherwise provided, a particle diameter may be an average particle diameter. In addition, the particle diameter may refer to an average particle diameter (D50), which indicates the diameter of particles having a cumulative volume of 50 volume% in the particle size distribution. The average particle diameter (D50) may be measured by a method known to those skilled in the art, for example, by a particle size analyzer, or by a transmission electron microscope image, or a scanning electron microscope image. Alternatively, a dynamic light-scattering measurement device is used to perform a data analysis, and the number of particles is counted for each particle size range. From this, the average particle diameter (D50) value may be easily obtained through a calculation. Alternatively, the average particle diameter (D50) can be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D50) on the basis of 50% of the particle diameter distribution in the measuring device.

As used herein, the "average particle size" of the binder indicates a volume average particle size, and refers to a Z-average particle size measured using a dynamic light scattering analysis device.

When the terms "about" or "substantially" are used in this specification in connection with a numerical value, it is intended that the associated numerical value includes a tolerance of ±10% around the stated numerical value. When ranges are specified, the range includes all values therebetween such as increments of 0.1%.

### Insulating Composition for Rechargeable Lithium Battery:

One example embodiment of the present invention is an insulating composition for a rechargeable lithium battery including a binder including a non-aqueous binder and an aqueous binder; inorganic particles; and a solvent. The non-aqueous binder includes a first non-aqueous polyvinylidene fluoride-based binder and a second non-aqueous polyimide-based binder.

The insulating composition for the rechargeable lithium battery according to this embodiment may further improve coating processability and insulating layer properties while compensating for the shortcomings of a non-aqueous binder and an aqueous binder.

Hereinafter, an insulating composition for a rechargeable lithium battery according to the aforementioned example embodiment is described in detail.

### Non-aqueous Binder (first non-aqueous binder and second non-aqueous binder

The non-aqueous binder commonly used in insulating compositions in the art is polyvinylidene fluoride. As described above, a challenge may arise in that the adhesive strength is lost as the electrolyte solution is absorbed and swelling occurs within the rechargeable lithium battery after being coated on the positive or negative electrode uncoated region.

In contrast, the insulating composition for the rechargeable lithium battery according to the above-described example embodiment of the present invention includes a non-aqueous binder including a first non-aqueous polyvinylidene fluoride-based binder and a second non-aqueous polyimide-based binder.

By using the second non-aqueous polyimide-based binder in combination with the first non-aqueous polyvinylidene fluoride-based binder as a non-aqueous binder, the viscosity of the slurry may be hindered or suppressed from rapidly decreasing, thereby improving the coating processability, while improving the physical properties of the final electrode, such as improved adhesive strength, reduced swelling rate, and reduction or suppression of curling shape, compared to when the first non-aqueous polyvinylidene fluoride-based binder is used alone.

The polyimide-based second non-aqueous binder may not include a carboxyl group (*-COOH). This is because when the carboxyl group (*-COOH) is included, the Thixotropy Index (T.I) value of the insulating composition slurry is high, and thus the rheological properties of the slurry may be poor. The Thixotropy Index (T.I) value is obtained by dividing a viscosity at a shear rate of 1 s⁻¹ at 25 °C by a viscosity at a shear rate of 10 s⁻¹, and then taking the logarithm. The presence/absence of the carboxyl group (*-COOH) may be confirmed by Fourier Transform Infra-Red (FT-IR) spectroscopy.

A weight ratio of the first non-aqueous polyvinylidene fluoride-based binder to the second non-aqueous polyimide-based binder may be in a range of about 10:90 to about 90:10, about 20:80 to about 80:20, or about 30:70 to about 70:30.

Within the above range, a synergistic effect may be realized by mixed use of the first non-aqueous polyvinylidene fluoride-based binder and the second non-aqueous polyimide-based binder.

### Aqueous Binder

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluororubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

For example, the aqueous binder may be or include a styrene-butadiene rubber, and optionally a styrene-butadiene rubber substituted by an organic solvent (e.g., N-Methyl-2-pyrrolidone (NMP)).

By using the aqueous binder mixed with the non-aqueous binder, the physical properties of the final manufactured electrode may be improved, such as improved adhesive strength, reduced swelling rate, and reduction or suppression of curling shape, compared to using the non-aqueous binder alone.

A weight ratio of the non-aqueous binder and the aqueous binder may be in a range of about 90:10 to about 60:40, or about 80:20 to about 70:30, and within this range, a synergistic effect may be realized by mixed use of the non-aqueous binder and the aqueous binder.

### Binder Mixing

Based on the total amount of 100 wt% of the binder, the first non-aqueous polyvinylidene fluoride-based binder may be included in an amount in a range of about 10 wt% to about 70 wt%, about 20 wt% to about 60 wt%, or about 30 wt% to about 50 wt%; the second non-aqueous polyimide-based binder may be included in an amount in a range of about 10 wt% to about 70 wt%, about 20 wt% to about 60 wt%, or about 30 wt% to about 50 wt%; and the aqueous binder may be included in an amount in a range of about 10 wt% to about 40 wt%, about 15 wt% to about 40 wt%, or about 20 wt% to about 40 wt%.

Within the above range, a synergistic effect may be realized by mixed use of the first non-aqueous polyvinylidene fluoride-based binder, the second non-aqueous polyimide-based binder, and the aqueous binder.

### Inorganic Particles

The inorganic particles may be or include at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but are not limited thereto.

The average particle diameter (D50) of the inorganic particles may be in a range of about 1 µm to about 2.5 µm, but is not limited thereto.

### Solvent

The solvent may be or include at least one of NMP, N-Ethylpyrrolidone (NEP), dimethylacetamide (DMAc), dimethylformamide (DMF), and a combination thereof, but is not limited thereto.

### Composition Mixing

Based on the total amount of 100 wt% of the composition for the insulating layer, the binder may be included in an amount in a range of about 60 wt% to about 90 wt%; the inorganic particles may be included in an amount in a range of about 10 wt% to about 40 wt%; and the solvent may be included in a balance amount.

A weight ratio of the binder and the inorganic particles may be in a range of about 90:10 to about 60:40, or about 80:20 to about 70:30.

When the above ranges are satisfied, the adhesive strength by the binder and insulation properties by the inorganic particles may be harmonized, and they may be dispersed in the solvent.

### Composition Characteristics

The desired or improved physical properties exhibited by the composition for the insulating layer are as follows.

The insulating composition may have a viscosity in a range of about 500 mPa.s to about 2500 mPa·s, for example, about 1000 mPa·s to about 2000 mPa·s, at a shear rate of about 10 s⁻¹ at a temperature of about 25 °C.

The insulating composition may have a Thixotropy Index (T.I) value, which is a value obtained by dividing a viscosity at a shear rate of 1 s⁻¹ at 25 °C by a viscosity at a shear rate of 10 s⁻¹ and then taking the logarithm, of less than or equal to about 0.5, for example, less than or equal to about 0.2.

### Electrode:

The electrode according to some example embodiments of the present invention includes an electrode active material layer, an electrode current collector including a coated region where the electrode active material layer is disposed, and an uncoated region where the electrode active material layer is not disposed, and an insulating layer configured to coat at least a portion of the uncoated region.

The insulating layer includes a binder including a non-aqueous binder and an aqueous binder, and inorganic particles. The non-aqueous binder includes a first non-aqueous polyvinylidene fluoride-based binder and a second non-aqueous polyimide-based binder.

When at least a portion of the uncoated region is coated using the insulating composition for the rechargeable lithium battery according to the aforementioned example embodiments, the solvent is removed, and an insulating layer including the binder and the inorganic particles may be formed.

Accordingly, with respect to the electrode for a rechargeable lithium battery according to the aforementioned example embodiments, the same description may be applied, except for the 'solvent' in the aforementioned embodiments.

Hereinafter, an electrode for a rechargeable lithium battery according to the aforementioned example embodiments is described in detail, excluding any description overlapping with the aforementioned descriptions.

### Structure of Insulating Layer

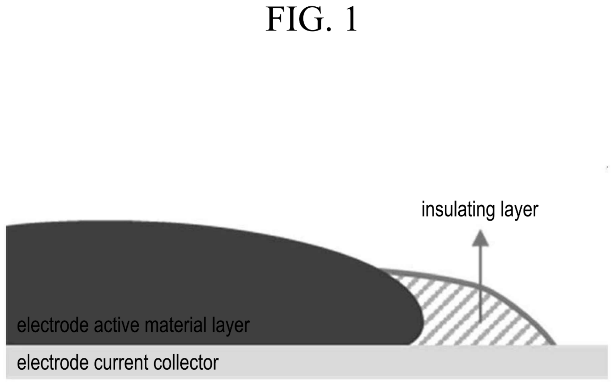

FIG. 1 is a schematic view illustrating an electrode for a rechargeable lithium battery according to the aforementioned example embodiments.

The insulating layer may cover, e.g., may simultaneously or contemporaneously cover, a burr formed at the edge of the electrode active material layer and a portion of the uncoated region, as illustrated in FIG. 1.

By forming an insulating layer with this structure, it is possible to effectively reduce or prevent burrs formed at the edge of the electrode uncoated region from coming into contact with other electrodes. The electrode may be either a positive electrode or a negative electrode. For example, a rechargeable lithium battery including a positive electrode to which the insulating layer is applied and a negative electrode to which the insulating layer is applied may be manufactured.

### Thickness of Insulating Layer

The thickness of the insulating layer may be thicker than the thickness of the burr formed at the edge of the electrode coated region.

For example, the thickness of the insulating layer may be in a range of about 5 to about 50 µm. Within this range, the burr formed at the edge of the electrode coated region may be effectively hindered or prevented from contacting the opposed electrode.

### Physical Properties of Electrode including Insulating Layer

The desired or improved physical properties exhibited by the insulating layer are as follows.

The crosslinking density, expressed as a weight ratio of the crosslinked polymer based on 100 wt% of a total weight of the insulating layer, may be greater than or equal to about 10%, for example, greater than or equal to about 20%.

Based on a total area 100 area% of the insulating layer, an area from which the insulating layer is detached after 24 hours of immersing the electrode in the electrolyte solution may be less than or equal to about 10 area%, for example, about 0 area%.

Based on a total length 100 length% of the insulating layer, after immersing the electrode in the electrolyte solution and at room temperature for a duration of about 24 hours, a change in length of the insulating layer may be less than or equal to about 5 length%, for example, about 0 length%.

The aforementioned electrolyte solution may be a or include mixture of about 1.5 M lithium salt (LiPF₆) in a carbonate solvent in which ethylene carbonate (EC): ethyl methyl carbonate (EMC): dimethyl carbonate (DMC) are mixed in a volume ratio of about 20:40:40.

### Rechargeable Lithium Battery:

The rechargeable lithium battery according to some embodiments of the present invention includes a positive electrode, a negative electrode, a separator between the positive electrode and the negative electrode, and an electrolyte solution, wherein at least one of the positive electrode and the negative electrode is or includes the electrode according to aforementioned embodiments.

Accordingly, an electrode and a rechargeable lithium battery manufactured using the insulating composition for the rechargeable lithium battery according to the aforementioned embodiments may exhibit desired or improved cycle-life characteristics.

Hereinafter, a rechargeable lithium battery of some example embodiments is described in detail, excluding duplicate descriptions.

### Positive Electrode Active Material

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof may be included.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be included. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently are or include one or more of Al, B, Ba, Ca, Ce, Co, Cr, Cu, Fe, Mg, Mn, Mo, Nb, Si, Sn, Sr, Ti, V, W, and Zr, and X is one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂COₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: Liₐ₄Niₓ₄Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 %, or greater than or equal to about 94 mol% and less than or equal to about 99 mol%, based on 100 mol% of metal excluding lithium in the lithium transition metal composite oxide. The high-nickel positive electrode active material may achieve high capacity and may be applied to high-capacity, high-density rechargeable lithium batteries.

### Positive Electrode

The positive electrode for a rechargeable lithium battery may include a current collector, and a positive electrode active material layer on the current collector. The positive electrode may be manufactured using the insulating composition for the rechargeable lithium battery according to the aforementioned example embodiments.

The positive electrode active material layer may include a positive electrode active material, and may further include a binder and/or a conductive material.

For example, the positive electrode may further include an additive that may function as a sacrificial positive electrode.

An amount of the positive electrode active material may be in a range of about 90 wt% to about 99.5 wt% based on 100 wt% of the positive electrode active material layer, and each amount of the binder and the conductive material may be in a range of about 0.5 wt% to about 5 wt% based on 100 wt% of the positive electrode active material layer.

The binder is configured to improve binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be included as a conductive material unless the electrically conductive material causes an adverse chemical change in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

### Negative Electrode

A negative electrode for a rechargeable lithium battery includes a current collector, and a negative electrode active material layer on the current collector. The negative electrode active material layer includes a negative electrode active material and may further include a binder and/or a conductive material. The negative electrode may be or include a negative electrode manufactured using the insulating composition for the rechargeable lithium battery according to the above-described example embodiment.

For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder is configured to adhere the negative electrode active material particles to each other, and to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluororubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed. The alkali metal may be or include at least one of Na, K, or Li.

The dry binder is or includes a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

The conductive material is included to provide electrode conductivity, and any electrically conductive material may be included as a conductive material unless the electrically conductive material causes an adverse chemical change in the battery. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

### Electrolyte Solution

An electrolyte solution for a rechargeable lithium battery includes a non-aqueous organic solvent and a lithium salt.

The non-aqueous organic solvent is configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be included alone or in a mixture of two or more types of solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The electrolyte may further include at least one of vinylethyl carbonate, vinylene carbonate, fluoroethylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, or a combination thereof, as an additive.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

### Separator

Depending on the type of rechargeable lithium battery, a separator may be present between the positive and negative electrodes. The separator may include at least one of polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include a porous substrate, and a coating layer including an organic material, an inorganic material, or a combination thereof on one surface, or on both surfaces, of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Rechargeable Lithium Battery

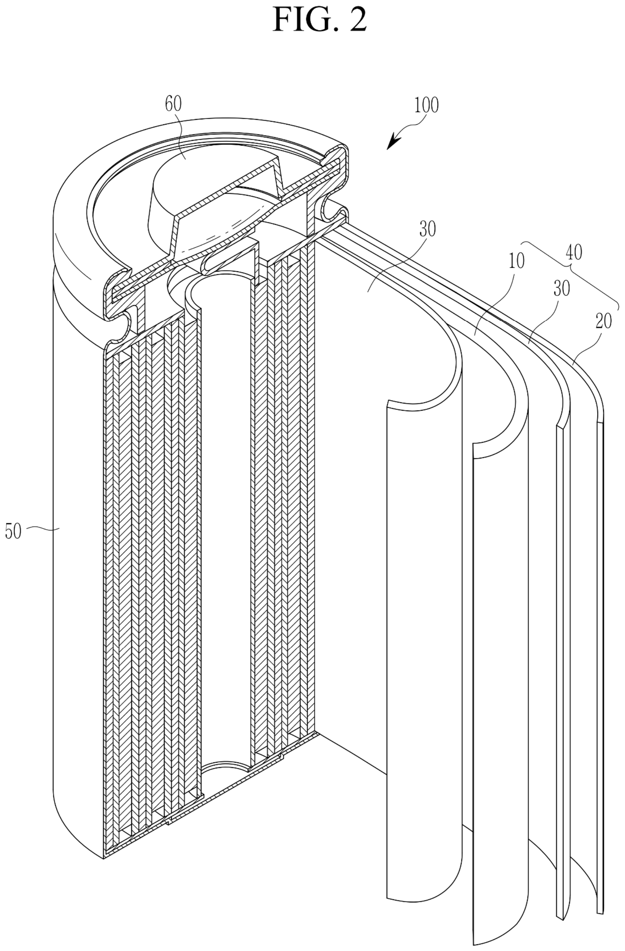

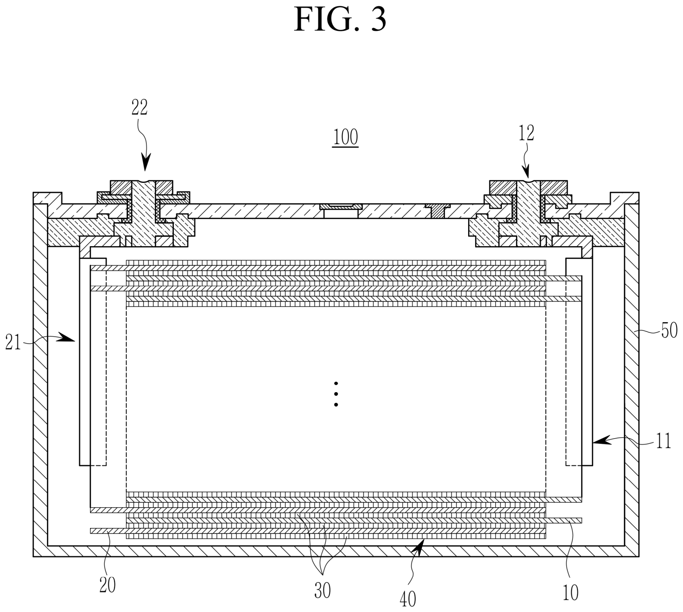

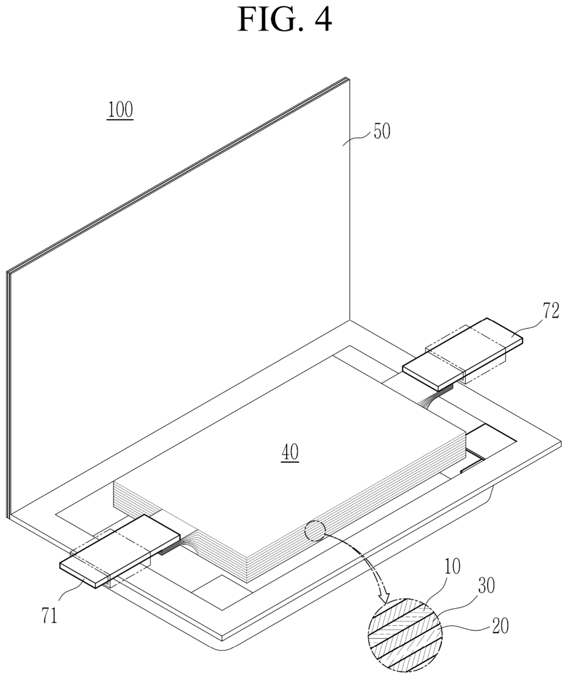

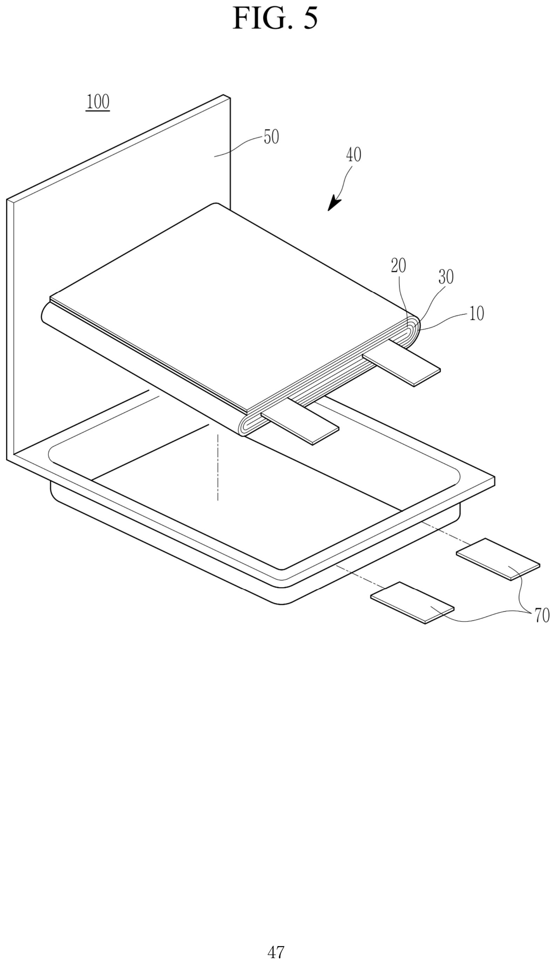

The rechargeable lithium battery may be classified into cylindrical, prismatic, pouch, or coin-type batteries, and the like depending on the shape thereof. FIGS. 2 to 5 are schematic views illustrating the rechargeable lithium battery according to some example embodiments, where FIG. 2 is a cylindrical battery, FIG. 3 is a prismatic battery, and FIGS. 4 and 5 are a pouch-shaped battery. Referring to FIGS. 2 to 5, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50, as illustrated in FIG. 2. Additionally, in FIG. 3, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 4 and 5, the rechargeable lithium battery 100 includes an electrode tab 70 illustrated in FIG. 5, or a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to some example embodiments may be applicable to automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

### Example 1

### (1) Preparation of Insulating Composition

Polyvinylidene fluoride (Mw: 700 to 900 g/mol) as a first non-aqueous binder, polyimide (Mw: 260,000 to 280,000 g/mol) as a second non-aqueous binder, and a styrene-butadiene rubber (Mw: 1.4 to 1.6 million g/mol) as an aqueous binder were mixed in a weight ratio of 1:1:1.

80 wt% to 90 wt% of the mixed binder, 10 wt% to 20 wt% of boehmite as inorganic particles having an average particle diameter (D50) of 2 µm, and a solvent of NMP were mixed to prepare an insulating composition having a solid content of 10 wt% to 20 wt%.

Herein, a weight ratio of the total binder amount to the inorganic particles was in a range of 80:20 to 90:10.

### (2) Manufacturing of Positive Electrode

Aluminum foil with a width*width*thickness of 75 mm*68 mm*0.012 mm was used as the positive electrode current collector.

A positive electrode slurry was prepared by mixing LiNi_{0.91}Co_{0.05}Al_{0.04}O₂ as a positive electrode active material, polyvinylidene fluoride (PVDF) as a binder, and carbon as a conductive agent in a weight ratio of 92:4:4, and dispersing the mixture in N-methyl-2-pyrrolidone. This slurry was coated on the aluminum foil so that the width*width*thickness became 65.8 mm*60 mm*0.078 mm, thereby forming a positive electrode active material layer.

A portion of the positive electrode current collector where the positive electrode active material layer was disposed is referred to as a 'positive electrode coated region,' and the other portion of the positive electrode current collector where the positive electrode active material layer was not disposed is referred to as a 'positive electrode uncoated region.'

The insulating composition was coated on the 'positive electrode uncoated region' with a width in a range of 5 mm to 20 mm and a thickness in a range of 10 µm to 20 µm, and was coated simultaneously with the positive electrode active material layer or was post-coated and dried. The insulating layer may or may not overlap with the positive electrode coated region.

### (3) Manufacturing of Negative Electrode

A negative electrode active material slurry was manufactured by mixing artificial graphite and silicon particles in a weight ratio of 93.5:6.5 as a negative electrode active material, and mixing this negative electrode active material: a styrene-butadiene rubber binder: carboxylmethyl cellulose in a weight ratio of 97:1:2 and dispersing the mixture in distilled water.

The negative electrode active material slurry was coated on a 10 µm-thick Cu foil, and dried at 100 °C and pressed to form a negative electrode active material layer.

The insulating composition was coated on the 'negative electrode uncoated region' with a width in a range of 5 mm to 20 mm and a thickness in a range of 10 µm to 20 µm, and is coated simultaneously with the negative electrode active material layer or was post-coated and dried.

### (4) Preparation of Electrolyte Solution

An electrolyte solution was prepared by mixing 1.5 M lithium salt (LiPF₆) with a carbonate solvent including ethylene carbonate (EC): ethyl methyl carbonate (EMC): dimethyl carbonate (DMC) mixed in a volume ratio of 20:40:40.

### (5) Manufacturing of Rechargeable Lithium Battery Cell

The manufactured positive and negative electrodes were assembled to obtain an electrode assembly, and inserted into a prismatic case, and the electrolyte solution was injected thereinto to manufacture a rechargeable lithium battery cell.

### Examples 2 to 5

Insulating compositions, positive electrodes, and rechargeable lithium battery cells of Examples 2 to 5 were manufactured in the same manner as in Example 1, with the difference that the weight ratio of polyvinylidene fluoride:polyimide:styrene-butadiene rubber was changed according to Table 1 below when preparing the insulating composition.

### Comparative Examples 1 to 9

Insulating compositions, positive electrodes, and rechargeable lithium battery cells of Comparative Examples 1 to 9 were manufactured in the same manner as in Example 1, with the difference that the weight ratio of polyvinylidene fluoride:polyimide:styrene-butadiene rubber was changed according to Table 2 below when preparing the insulating composition.

### Evaluation Example 1: Evaluation of Insulating Composition

For each insulating composition of Examples 1 to 5 and Comparative Examples 1 to 9, evaluation was performed using the following methods, and the results are shown in Tables 1 and 2 below.
(1) Particle size: 0.08 g of the insulating composition was dispersed in 5 mL of NMP dispersion solvent using a particle size analyzer (Malvern Mastersizer 3000), and measured between 1500 rpm and 1700 rpm, and then evaluated according to the following criteria.
   ⊚: When the D50 value is in the range of 1.5 µm to 3 µm and the volume density of the center value of the graph with normal distribution is 8% or more
   ○: When the D50 value deviates from the range of 1.5 µm to 3 µm by being less than 0.5 µm and the volume density of the center value of the graph with normal distribution is less than 8%
   X: When the D50 value deviates from the range of 1.5 µm to 3 µm by being less than 0.5 µm and deviates from the normal distribution and has two or more center values
(2) Viscosity: measured at a shear rate of 10 s⁻¹ at 25 °C by attaching a cone plate PP25 to a viscosity measuring apparatus (Anton Paar, MCR302E), and evaluated according to the following criteria.
   ⊚: viscosity in a range of 1000 mPa · s to 2000 mPa · s at a shear rate of 10 s⁻¹
   O: viscosity of less than or equal to 500 mPa · s in the range of 1000 mPa · s to 2000 mPa · s at a shear rate of 10 s⁻¹
   △: viscosity deviated by greater than or equal to 500 mPa · s in the range of 1000 mPa · s to 2000 mPa · s at a shear rate of 10 s⁻¹
   X: viscosity was immeasurable
(3) T.I: Thixotropy Index (T.I) was evaluated according to the following
   criteria by dividing viscosity at a shear rate of 1 s⁻¹ at 25 °C by viscosity at a shear rate of 10 s⁻¹, and calculating a logarithmic value thereof.
   ⊚ : T.I of less than or equal to 0.2
   ○ : T.I of 0.2 to 0.5
   Δ : T.I of greater than or equal to 0.5
   X: viscosity was immeasurable

### Evaluation Example 2: Evaluation of Positive Electrode

For each positive electrode of Examples 1 to 5 and Comparative Examples 1 to 9, the evaluation was performed using the following method, and the results are shown in Tables 1 and 2 below.
(1) Adhesive Strength (Peel): Each of the insulating compositions was coated to be 10 µm thick on an aluminum substrate, dried at 130 °C in an oven, and immersed in an electrolyte solution, and after 24 hours, whether or not an insulating layer was detached or not from the aluminum substrate was determined. The results were evaluated according to the following criteria. Herein, the electrolyte solution used above was the same as the electrolyte solution used in Example 1.
   ⊚ : detachment of 0 area%
   ○: detachment possibility of 0 area% to10 area%
   △ : detachment possibility of 10 area% to 20 area%
   X : detachment possibility of greater than or equal to 20 area%
(2) Swelling Rate: Each of the insulating compositions was coated to be 10 µm thick on an aluminum substrate, dried at 130 °C in an oven, and immersed in an electrolyte solution, and after 24 hours at room temperature, each insulating layer was measured with respect to a length change. The results were evaluated according to the following criteria. Herein, the electrolyte solution used above was the same as the electrolyte solution used in Example 1.
   ⊚ : swelling rate of 0 length%
   ○ : swelling rate of 0 length% to 5 length%
   △ : swelling rate of 5 length% to 10 length%
   X : swelling rate of greater than or equal to 10 length%
(3) Curling: A sample was prepared by coating an insulating composition with a thickness of 20 µm on an aluminum substrate, drying it in an oven at 130 °C, and then punching it to 36 ϕ. A 2cmX2cm cut was made in the center of the sample, and the center was measured using a ruler. The results were evaluated according to the following criteria.
   ⊚: Curl height of less than or equal to 1 mm
   ○: curl height of 1 mm to 2 mm
   △: curl height of 2 mm to 3 mm
   X: curl height of greater than or equal to 3 mm

### Evaluation Example 3: Evaluation of Rechargeable Lithium Battery Cell

For each rechargeable lithium battery cell of Examples 1 to 5 and Comparative Examples 1 to 9, the evaluation was performed using the following method, and the results are shown in Tables 1 and 2.

Cycle-life characteristics were evaluated by calculating a ratio of 500^{th} cycle discharge capacity to 1^{st} cycle discharge capacity after 500 cycles charging and discharging coin cells at 0.5 C within a voltage range of 3.0 to 4.25 V at 25 °C.
⊚ : cycle-life characteristics of greater than or equal to 90%
○ : cycle-life characteristics of 80 % to 90%
△ : cycle-life characteristics of 60 % to 80%
X : cycle-life characteristics of less than or equal to 60%

**Table 1:**

| (unit: parts by weight) | | | | | | |
|---|---|---|---|---|---|---|
| | | Example 1 | Example 2 | Example 3 | Example 4 | Example 5 |
| PVdF | | 100/3 | 70 | 60 | 20 | 10 |
| PI | | 100/3 | 10 | 20 | 60 | 70 |
| SBR | | 100/3 | 20 | 20 | 20 | 20 |
| Characteristi | Particle | ⊚ | ⊚ | ⊚ | ⊚ | ⊚ |
| cs of composition | size | | | | | |
| | Viscosity | ⊚ | ⊚ | ⊚ | ⊚ | ⊚ |
| | Processability | ⊚ | ⊚ | ⊚ | ⊚ | ⊚ |
| Mechanical properties | Adhesive strength | ⊚ | ○ | ○ | ⊚ | ⊚ |
| | Swelling rate | ⊚ | ⊚ | ⊚ | ○ | ○ |
| | Curling | ⊚ | ⊚ | ⊚ | ⊚ | ⊚ |
| Battery cell characteristics | Cycle-life | ⊚ | ⊚ | ⊚ | ⊚ | ⊚ |

**Table 2:**

| (unit: parts by weight) | | | | | | | | | | |
|---|---|---|---|---|---|---|---|---|---|---|
| | | Comp arativ e Exam ple 1 | Comp arativ e Exam ple 2 | Comp arativ e Exam ple 3 | Comp arativ e Exam ple 4 | Comp arativ e Exam ple 5 | Comp arativ e Exam ple 6 | Comp arativ e Exam ple 7 | Comp arativ e Exam ple 8 | Comp arativ e Exam ple 9 |
| PVdF | | 100 | 0 | 0 | 50 | 50 | 0 | 80 | 10 | 45 |
| PI | | 0 | 0 | 100 | 0 | 50 | 50 | 10 | 80 | 45 |
| SBR | | 0 | 100 | 0 | 50 | 0 | 50 | 10 | 10 | 10 |
| Charact eristics of compos ition | Parti cle size | ⊚ | ⊚ | ○ | ⊚ | ○ | ○ | ⊚ | ○ | ○ |
| | Visco sity | ⊚ | △ | ⊚ | △ | ⊚ | △ | ○ | ○ | △ |
| | Proc essa bility | ⊚ | △ | ⊚ | △ | ⊚ | △ | ○ | ○ | △ |
| Mechan ical properti es | Adhe sive stren gth | △ | ⊚ | ○ | ⊚ | △ | ⊚ | △ | △ | △ |
| | Swell ing rate | ○ | ⊚ | △ | ○ | △ | ○ | △ | △ | △ |
| | Curli ng | △ | ⊚ | △ | ⊚ | △ | ⊚ | ○ | ○ | ○ |
| Battery cell charact eristics | Cycle -life | △ | ⊚ | ○ | ⊚ | △ | ⊚ | △ | △ | △ |

The insulating compositions for the rechargeable lithium battery represented by Examples 1 to 5, using the non-aqueous binder and aqueous binder in combination, and using the first non-aqueous polyvinylidene fluoride-based binder and the second non-aqueous polyimide-based binder as the non-aqueous binder, exhibited further improved coating processability and insulating layer properties while compensating for the shortcomings of the non-aqueous binder and the aqueous binder.

Accordingly, an electrode and a rechargeable lithium battery manufactured using the insulating composition for the rechargeable lithium battery according to the aforementioned embodiments may exhibit desired or improved cycle-life characteristics.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

### List of reference numerals:

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. An insulating composition for a rechargeable lithium battery, the insulation composition comprising:
a binder including a non-aqueous binder and an aqueous binder;
inorganic particles; and
a solvent,
wherein the non-aqueous binder includes:
a first non-aqueous polyvinylidene fluoride-based binder, and
a second non-aqueous polyimide-based binder.

2. The insulating composition as claimed in claim 1, wherein:
a weight ratio of the first non-aqueous polyvinylidene fluoride-based binder to the second non-aqueous polyimide-based binder is in a range of about 10:90 to about 90:10.

3. The insulating composition as claimed in claim 1 or 2, wherein:
the aqueous binder comprises at least one of a styrene-butadiene rubber, a (meth)acrylated styrene-butadiene rubber, a (meth)acrylonitrile-butadiene rubber, a (meth)acrylic rubber, a butyl rubber, a fluororubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

4. The insulating composition as claimed in any of claims 1-3, wherein:
a weight ratio of the non-aqueous binder and the aqueous binder is in a range of about 90:10 to about 60:40.

5. The insulating composition as claimed in any of claims 1-4, wherein based on the total amount of 100 wt% of the binder:
the first non-aqueous polyvinylidene fluoride-based binder is included in an amount in a range of about 10 wt% to about 70 wt%,
the second non-aqueous polyimide-based binder is included in an amount in a range of about 10 wt% to about 70 wt%, and
the aqueous binder is included in an amount in a range of about 10 wt% to about 40 wt%.

6. The insulating composition as claimed in any of claims 1-5, wherein:
the inorganic particles comprise at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof.

7. The insulating composition as claimed in any of claims 1-6, wherein:
a weight ratio of the binder and the inorganic particles is in a range of about 90:10 to about 60:40.

8. The insulating composition as claimed in any of claim 1-7, wherein:
the solvent comprises at least one of NMP, NEP, DMAc, DMF, and a combination thereof.

9. The insulating composition as claimed in any of claims 1-8, wherein based on the total amount of 100 wt% of the composition for the insulating layer:
the binder is included in an amount in a range of about 70 wt% to about 90 wt%;
the inorganic particles are included in an amount in a range of about 10 wt% to about 30 wt%; and
the solvent is included in a balance amount.

10. The insulating composition as claimed in any of claims 1-9, wherein:
the insulating composition has a viscosity in a range of about 500 mPa · s to about 2500 mPa · s at a temperature of about 25 °C, and a shear rate of about 10/sec.

11. The insulating composition as claimed in any of claims 1-10, wherein:
the insulating composition has a Thixotropy Index (T.I) value in a range of about 0.1 to about 0.6.

12. An electrode for a rechargeable lithium battery, the electrode comprising:
an electrode active material layer;
an electrode current collector including a coated region where the electrode active material layer is disposed, and an uncoated region where the electrode active material layer is not disposed; and
an insulating layer configured to coat at least a portion of the uncoated region,
wherein the insulating layer includes:
a binder including a non-aqueous binder and an aqueous binder; and
inorganic particles, and
the non-aqueous binder includes:
a first non-aqueous polyvinylidene fluoride-based binder; and
a second non-aqueous polyimide-based binder.

13. The electrode as claimed in claim 12, wherein the insulating layer has a crosslinking density of greater than or equal to about 10%; orwherein an area from which the insulating layer is detached after about 24 hours of immersing the electrode in the electrolyte solution, based on a total area 100 area% of the insulating layer, of less than or equal to about 10 area%; or
wherein
based on a total length 100 length% of the insulating layer, after immersing the electrode in the electrolyte solution and at room temperature for about 24 hours, a change in length of the insulating layer is less than or equal to about 5 length%; or wherein
the insulating layer covers a burr formed at an edge of the electrode active material layer and a portion of the uncoated region; or wherein
a thickness of the insulating layer is in a range of about 8 µm to about 40 µm; or wherein
the electrode comprises a positive electrode.

14. A rechargeable lithium battery, comprising:
a positive electrode;
a negative electrode;
a separator between the positive electrode and the negative electrode; and
an electrolyte solution,
wherein at least one of the positive electrode and the negative electrode comprises the electrode as claimed in claim 12 or 13.

15. An electronic device or an electronic vehicle containing a rechargeable lithium battery as claimed in the previous claim.
